# FASCICULE DE BREVET EUROPEEN

(11) **EP 2 651 685 B1**
(45) Date de publication et mention de la délivrance du brevet: **13.05.2015**
(21) Numéro de dépôt: 11794078.3
(22) Date de dépôt: 30.11.2011
(51) Int. Cl.: B60K 37/04, G06F 1/16, G06F 3/037, G06F 3/01, B60K 35/00

(54) **DISPOSITIF DE COMMANDE HAPTIQUE COMPORTANT UN JOINT D'ETANCHEITE**
HAPTISCHE STEUERUNGSVORRICHTUNG MIT EINER DICHTUNG
HAPTIC CONTROL DEVICE COMPRISING A SEALING GASKET

(30) Priorité: 13.12.2010 FR 1060437
(43) Date de publication de la demande: 23.10.2013
(73) Titulaire: Delphi Technologies, Inc., Troy, MI 48007 (US)
(72) Inventeur: CORDIER, Emmanuel, F-67190 Grendelbruch (FR); MOLARD, Yannick, F-67130 Hersbach (FR)
(74) Mandataire: Robert, Vincent
(86) Numéro de dépôt international: PCT/EP2011/071436
(87) Numéro de publication internationale: WO 2012/079990

(56) Documents cités:
- EP-A1- 0 293 291
- EP-A1- 1 310 860
- EP-A1- 2 249 226
- WO-A2-2006/074712
- DE-A1-102008 058 566

## Description

### DOMAINE TECHNIQUE

La présente invention concerne un dispositif de commande haptique, notamment pour un véhicule automobile.

### ARRIERE-PLAN TECHNOLOGIQUE DE L'INVENTION

La présente invention concerne plus particulièrement un dispositif de commande haptique qui comprend un panneau transversal tactile monté mobile par rapport à un support fixe. Le support, qui peut avoir la forme d'un boîtier, comporte une paroi périphérique qui entoure le panneau tactile et qui s'étend globalement vers l'avant suivant une direction axiale orthogonale au plan du panneau tactile. Le panneau tactile est pourvu d'au moins une zone tactile à l'avant et d'au moins un système d'entraînement. Lorsqu'un signal de commutation est déclenché suite à l'effleurement de la zone tactile par le doigt d'un utilisateur, le panneau tactile est entraîné par le système d'entraînement dans le plan du panneau tactile en effectuant des mouvements par rapport au support, par exemple selon un rythme prédéfini. Un écran d'affichage est agencé sur le support, derrière le panneau tactile, de manière que l'utilisateur puisse commander des fonctions par effleurement de la zone tactile, par exemple en fonction de ce qui est affiché sur une zone de l'écran située au droit de la zone tactile effleurée.

Un tel type de dispositif de commande haptique est décrit par exemple dans le document US2008/0111788A1.

Un problème rencontré dans l'utilisation de ce type de dispositif est l'étanchéité du montage. Ce point est particulièrement critique dans le cas d'applications automobiles où le dispositif de commande haptique est monté sur le tableau de bord du véhicule et peut être exposé à de la poussière et à des projections de liquide. Cette étanchéité est difficile à réaliser notamment en raison des mouvements du panneau tactile par rapport au support.

EP 1 310 860 A1, considéré comme l'état de l'art le plus proche, révèle le préambule de la revendication 1.

### RESUME DE L'INVENTION

La présente invention vise à résoudre les problèmes mentionnés précédemment en proposant une solution d'étanchéité simple, efficace, et économique.

Dans ce but, l'invention propose un dispositif de commande haptique, notamment pour un véhicule automobile, qui comprend un panneau transversal tactile monté mobile par rapport à un support fixe, le support comportant une paroi périphérique qui entoure le panneau tactile et qui s'étend globalement vers l'avant suivant une direction axiale orthogonale au plan du panneau tactile, le panneau tactile étant pourvu d'au moins une zone tactile à l'avant et d'au moins un système d'entraînement, un signal de commutation pouvant être déclenché lorsque la zone tactile est effleurée de manière que le panneau tactile soit entraîné par le système d'entraînement dans le plan du panneau tactile en effectuant des mouvements par rapport au support, caractérisé en ce qu'un joint d'étanchéité est agencé sur le pourtour du panneau tactile, dans un espace annulaire situé entre le panneau tactile et la paroi périphérique du support, le joint d'étanchéité comportant :
- une portion interne en contact étanche avec le panneau tactile,
- une portion externe en contact étanche avec la paroi périphérique du support, et
- une portion de liaison qui s'étend entre la portion interne et la portion externe et qui est déformable élastiquement de manière à absorber les déplacements relatifs du panneau tactile par rapport à la paroi périphérique du support sans supprimer l'effet haptique produit par les mouvements du panneau tactile.

Le joint d'étanchéité selon l'invention permet d'empêcher la pénétration de poussières ou de liquides entre le panneau tactile et la paroi périphérique du support, tout en laissant au panneau tactile une liberté de mouvement suffisante pour produire l'effet haptique recherché dans le dispositif de commande haptique. En effet, il importe de ne pas amortir excessivement les mouvements du panneau tactile par rapport au support sous peine de supprimer l'effet haptique. Le choix d'un matériau adapté et d'un profil adapté pour la portion de liaison permet de contribuer à l'obtention de ce résultat. La structure du joint d'étanchéité selon l'invention est particulièrement avantageuse car elle permet de localiser la déformation élastique dans la portion de liaison de sorte qu'en jouant sur la souplesse et l'élasticité de la portion de liaison ont obtient le résultat recherché.

Le joint d'étanchéité selon l'invention constitue aussi une solution particulièrement compacte pour résoudre les problèmes d'étanchéité puisqu'il occupe un volume très faible par rapport au volume général du panneau tactile.

Selon d'autres caractéristiques de l'invention :
- la portion interne du joint d'étanchéité comporte une jupe axiale qui s'étend sensiblement parallèlement à la paroi adjacente du panneau tactile et qui est plaquée contre la paroi adjacente du panneau tactile ;
- le panneau tactile comporte une dalle tactile qui est montée sur un châssis périphérique en forme de cadre, le châssis comportant une paroi axiale externe, et la jupe axiale est plaquée contre la paroi axiale externe du châssis ;
- la portion externe du joint d'étanchéité est constituée par une cloison axiale qui s'étend globalement dans le prolongement de la paroi périphérique du support vers l'avant ;
- la face externe de la paroi périphérique du support comporte une surface d'épaulement orientée vers l'avant et un tronçon d'extrémité arrière de la portion externe du joint d'étanchéité est monté en appui contre la surface d'épaulement ;
- la portion externe du joint d'étanchéité est montée serrée sur la paroi périphérique du support ;
- la portion de liaison a globalement la forme d'une cloison transversale ;
- la portion de liaison comporte un profil déformable élastiquement suivant une direction transversale d'entraînement du panneau tactile par rapport au support ;
- le profil déformable élastiquement a globalement une forme ondulée du type sinusoïdale dans un plan axial parallèle à la direction transversale d'entraînement ;
- le profil déformable élastiquement s'étend le long des segments longitudinaux de la portion de liaison, de part et d'autre du panneau tactile, parallèlement à la direction transversale d'entraînement, et le profil déformable élastiquement s'étend dans la largeur des segments latéraux, de part et d'autre du panneau tactile ;
- un couvercle en forme de cadre est monté sur la paroi périphérique du support de manière à délimiter intérieurement une zone accessible du panneau tactile, le couvercle étant monté en appui axial contre le sommet du joint d'étanchéité ;
- le couvercle comporte sur sa face transversale arrière une rainure qui est prévue pour recevoir une extension axiale de la portion externe du joint d'étanchéité ;
- la portion interne du joint d'étanchéité comporte une extension transversale interne qui est interposée entre le châssis et le couvercle ;
- un écran d'affichage est agencé entre le panneau tactile et une paroi de fond du support.
- le joint d'étanchéité est réalisé en matériau du type silicone.

### BREVE DESCRIPTION DES DESSINS

D'autres caractéristiques, buts et avantages de l'invention apparaîtront à la lecture de la description détaillée qui va suivre, et en regard des dessins annexés, donnés à titre d'exemple non limitatif et sur lesquels:
- la figure 1 est une vue éclatée en perspective qui représente un dispositif de commande haptique équipé d'un joint d'étanchéité conforme aux enseignements de l'invention ;
- la figure 2 est une vue partielle agrandie en coupe axiale selon le plan de coupe 2-2 qui représente une portion du dispositif de commande haptique de la figure 1 ;
- la figure 3 est une vue partielle agrandie en coupe axiale selon le plan de coupe 3-3 qui représente le joint d'étanchéité du dispositif de commande haptique de la figure 1 dans lequel une portion de liaison comporte un profil ondulé ;
- la figure 4 est une vue similaire à celle de la figure 3 qui représente une variante de réalisation du joint d'étanchéité dans lequel la portion de liaison comporte un profil constitué de formes triangulaires ;
- la figure 5 est une vue similaire à celle de la figure 3 qui représente une variante de réalisation du joint d'étanchéité dans lequel la portion de liaison comporte un profil plan.

### DESCRIPTION DES MODES DE REALISATION PREFERES

Dans la suite de la description, des éléments identiques ou similaires pourront être désignés par les mêmes références.

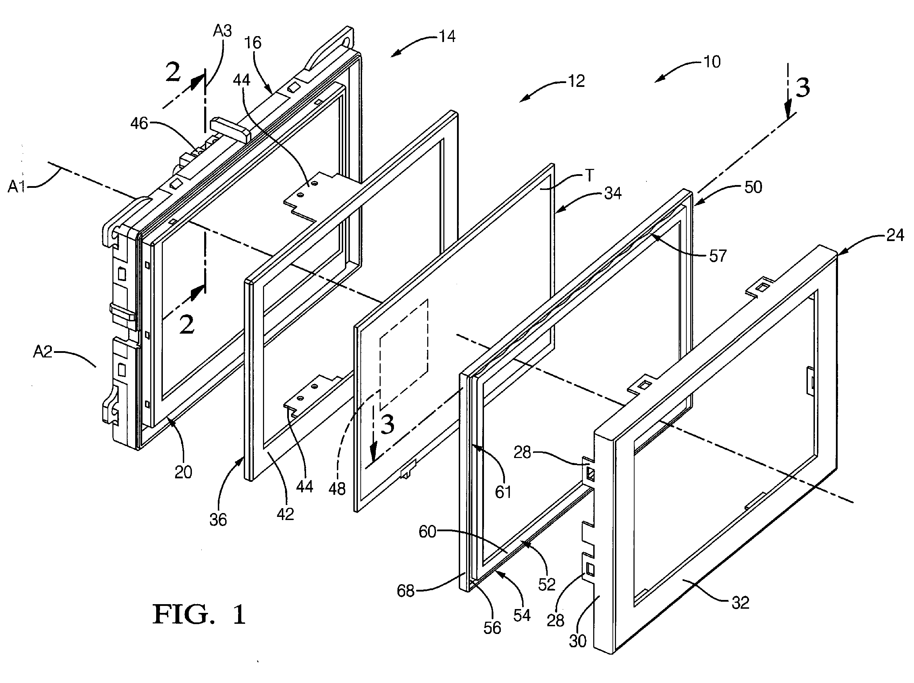

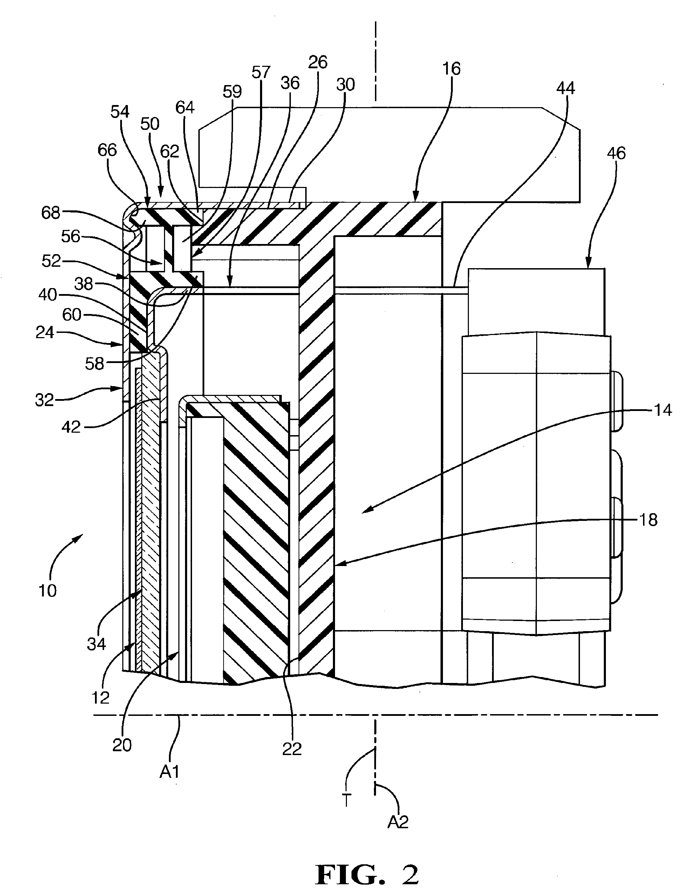

Sur les figures 1 et 2, on a représenté un dispositif de commande haptique 10 qui est réalisé conformément aux enseignements de l'invention. Ce dispositif 10 est prévu pour être monté, par exemple, sur la face avant du tableau de bord d'un véhicule automobile (non représenté), en vue de permettre au conducteur de commander différentes fonctions de son véhicule. Le dispositif de commande haptique 10 a ici globalement la forme d'un boîtier parallélépipédique qui s'étend dans un plan transversal T.

Dans la suite de la description, on utilisera à titre non limitatif une orientation transversale, selon le plan général du dispositif de commande haptique 10, et une orientation axiale A1 suivant une direction orthogonale au plan transversal T orientée de l'arrière vers l'avant, ce qui correspond globalement à une orientation de la gauche vers la droite en considérant la figure 1, et du bas vers le haut en considérant la figure 2. Dans un plan transversal T, des éléments seront qualifiés d'internes ou d'externes selon qu'ils sont orientés vers l'intérieur ou vers l'extérieur du dispositif de commande haptique 10.

Selon le mode de réalisation représenté, le dispositif de commande haptique 10 comporte un panneau transversal tactile 12 monté mobile par rapport à un support 14 fixe.

Le support 14 est ici constitué par un élément de boîtier comportant une paroi axiale périphérique 16 et une paroi de fond transversale 18 à l'arrière.

Un écran d'affichage 20 est fixé sur la face avant 22 de la paroi de fond 18. L'écran d'affichage 20 est par exemple un écran à cristaux liquides qui s'étend globalement dans un plan transversal sous le panneau tactile 12.

Un couvercle 24 en forme de cadre est monté sur la face externe 26 de la paroi périphérique 16 du support 14, par exemple par emboîtement élastique grâce à des languettes de fixation 28. Le couvercle 24 comporte une paroi axiale externe 30 qui s'étend vers l'arrière contre la face externe 26 de la paroi périphérique 16, et une portion de paroi transversale interne 32 qui délimite un cadre correspondant à une zone du panneau tactile 12 accessible à un utilisateur pour la commande. Ainsi, le couvercle 24 en forme de cadre a ici globalement un profil en L comme illustré par la figure 2.

Le panneau tactile 12 comporte ici une dalle tactile 34 rectangulaire qui est fixée sur un châssis périphérique 36 en forme de cadre rectangulaire. Le châssis 36 comporte une paroi axiale externe 38 qui s'étend vers l'arrière et une paroi transversale interne 40 qui est munie d'un décrochement interne vers l'arrière de manière à former un logement rectangulaire 42 pour la dalle tactile 34.

Selon le mode de réalisation représenté, le châssis 36 est muni à l'arrière de deux bras d'entraînement 44 qui sont agencés sur deux côtés opposés du cadre formé par le châssis 36 et qui sont liés à un système d'entraînement 46. Les deux bras d'entraînement 44 sont ici en forme de plaquettes minces de manière à pouvoir s'étendre dans un espace transversal entre le bord de l'écran d'affichage 20 et la paroi axiale périphérique 16 du support 14 et de manière à pouvoir se déplacer selon une direction transversale d'entraînement A2 parallèle audit bord de l'écran d'affichage 20. Le châssis 36 est par exemple réalisé en tôle métallique par emboutissage et pliage.

Le système d'entraînement 46 est constitué ici de deux actionneurs électriques qui sont montés sur la face arrière de la paroi de fond 18. Le système d'entraînement 46 est prévu pour produire des mouvements du panneau tactile 12 d'une amplitude de quelques dixièmes de millimètres.

La dalle tactile 34 comporte sur sa face avant au moins une zone tactile 48 qui est prévue pour déclencher un signal de commutation lorsqu'elle est effleurée, par exemple par le doigt d'un utilisateur, de manière que le panneau tactile 12 soit entraîné par le système d'entraînement 46 et le châssis 36 dans le plan du panneau tactile 12 en effectuant des mouvements, suivant la direction transversale d'entraînement A2, par rapport au support 14. Ces mouvements sont effectués selon un rythme qui peut être prédéfini en fonction de l'effet haptique recherché. Ils correspondent par exemple à des mouvements transversaux alternatifs de faible amplitude par rapport aux dimensions générales du panneau tactile 12. Ces mouvements du panneau tactile 12 permettent de fournir à l'utilisateur un retour d'effort lui confirmant, par exemple, la sélection ou la validation d'une fonction particulière du dispositif de commande haptique 10.

Selon une variante de réalisation, le panneau tactile 12 peut aussi être entraîné suivant une direction transversale A3 orthogonale à la direction transversale d'entraînement A2.

Conformément aux enseignements de l'invention, un joint d'étanchéité 50 est agencé sur le pourtour du panneau tactile 12, dans un espace annulaire situé entre le panneau tactile 12 et la paroi périphérique 16 du support 14. Le joint d'étanchéité 50 comporte :
- une portion interne 52 en contact étanche avec le panneau tactile 12, qui s'étend sur le pourtour extérieur du panneau tactile 12.
- une portion externe 54 en contact étanche avec la paroi périphérique 16 du support 14, qui s'étend sur le pourtour intérieur de la paroi périphérique 16, et
- une portion de liaison 56 qui s'étend entre la portion interne 52 et la portion externe 54 et qui est déformable élastiquement de manière à absorber les déplacements relatifs du panneau tactile 12 par rapport à la paroi périphérique 16 du support 14.

Le joint d'étanchéité 50 est réalisé dans un matériau suffisamment souple pour absorber les déplacements relatifs du panneau tactile 12 par rapport au support 14, par exemple dans un matériau du type silicone, du type élastomère, ou du type caoutchouc.

La portion interne 52 du joint d'étanchéité 50 comporte ici une jupe axiale 58 qui s'étend sensiblement parallèlement à la paroi adjacente du panneau tactile 12. La paroi adjacente du panneau tactile 12 est constituée ici par la paroi axiale externe 38 du châssis 36 et la jupe axiale 58 est montée plaquée contre ladite paroi axiale externe 38 pour former un montage étanche à la poussière et aux liquides.

La portion interne 52 du joint d'étanchéité 50 comporte ici une extension transversale interne 60 qui est prévue pour être interposée entre la paroi transversale interne 40 du châssis 36 et la paroi transversale interne 32 du couvercle 24.

La portion externe 54 du joint d'étanchéité 50 est constituée par une cloison axiale qui s'étend globalement vers l'avant dans le prolongement de la paroi périphérique 16 du support 14. Une surface d'épaulement 62, orientée vers l'avant, est aménagée dans la face externe de la paroi périphérique 16 du support 14 pour recevoir le tronçon d'extrémité arrière 64 de la portion externe 54 du joint d'étanchéité 50. La profondeur transversale de la surface d'épaulement 62 est ici sensiblement identique à l'épaisseur du tronçon d'extrémité arrière 64 de manière que la surface externe de la portion externe 54 du joint d'étanchéité soit sensiblement affleurante avec la surface externe de la paroi périphérique 16 du support 14.

La portion externe 54 du joint d'étanchéité 50 peut être montée serrée sur la paroi périphérique 16 du support 14. Selon une variante de réalisation, elle peut être surmoulée sur la paroi périphérique 16 du support 14.

Selon le mode de réalisation représenté, la portion de liaison 56 a la forme d'une cloison qui s'étend globalement dans un plan transversal, depuis la surface externe de la jupe axiale 58 jusqu'à la surface interne de la portion externe 54 du joint d'étanchéité 50.

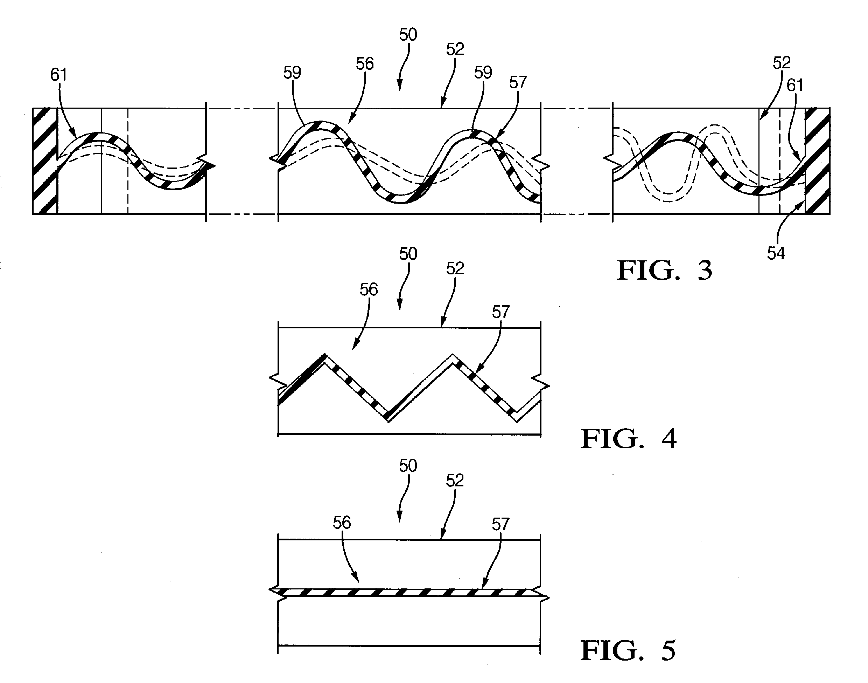

Selon le mode de réalisation représenté sur les figures 1, 2, et 3, la portion de liaison 56 comporte deux segments longitudinaux 57, qui s'étendent le long des bords longitudinaux du panneau tactile 12 parallèlement à la direction transversale d'entraînement A2, et qui ont un profil ondulé en forme de sinusoïde dans un plan axial parallèle à la partie adjacente de la paroi périphérique 16 du support 14 et parallèlement à la direction transversale d'entraînement A2, comme illustré par la figure 3. Les ondulations 59 formées par chaque segment longitudinal 57 permettent de faciliter la déformation élastique de la portion de liaison 56 dans le sens de la direction transversale d'entraînement A2, en minimisant la force élastique de résistance qui s'oppose à la translation déclenchée par les actionneurs 46. En effet, les ondulations 59 permettent d'ajouter de la matière de sorte que, durant la translation du panneau tactile 12, une partie de la déformation élastique de la portion de liaison 56 est obtenue par déformation de la sinusoïde, comme illustré en trait-tillé sur la figure 3. La résistance à la déformation au niveau des ondulations, selon la direction transversale d'entraînement A2, est moindre que ne serait la résistance à l'étirement et à la compression du matériau si les segments longitudinaux 57 étaient plans.

Selon le mode de réalisation représenté sur la figure 3, les segments latéraux 61 de la portion de liaison 56, qui s'étendent parallèlement à la direction transversale A3, ont aussi un profil sinusoïdal qui vient prolonger le profil sinusoïdal des segments longitudinaux 57, dans le sens de la largeur des segments latéraux 61.

Selon des variantes de réalisations, le profil sinusoïdal des segments longitudinaux 57 et des segments latéraux 61 peut être remplacé par un autre type de profil déformable élastiquement selon la direction transversale d'entraînement A2, par exemple un profil en forme de créneaux, ou un profil constitué de formes triangulaires, comme illustré par la figure 4.

Selon une variante de réalisation illustrée par la figure 5, les segments longitudinaux 57 et les segments latéraux 61 de la portion de liaison 56 peuvent être plans. Dans ce cas, la déformation élastique est obtenue par étirement et compression du matériau constituant la portion de liaison 56 selon la direction transversale d'entraînement A2.

Le couvercle 24 est ici monté par-dessus le joint d'étanchéité 50, de manière à le recouvrir entièrement et à le dissimuler aux yeux de l'utilisateur. La face arrière de la paroi transversale interne 32 du couvercle 24 comporte ici une rainure annulaire périphérique 66 qui longe la paroi axiale externe 30 du couvercle 24 de manière à former un logement pour le tronçon d'extrémité axiale avant 68 de la portion externe 54 du joint d'étanchéité 50.

Le couvercle 24 est ainsi monté en appui axial contre le sommet du joint d'étanchéité 50, sommet qui est formé ici par le tronçon d'extrémité axiale avant 68 et par la face avant de l'extension transversale interne 60.

En fonctionnement, lorsqu'un signal de commutation est émis, il provoque au moins un mouvement de translation transversale du panneau tactile 12 le long de l'axe transversal de déplacement A2 vers une extrémité transversale du support 14, par exemple vers la droite en considérant la figure 3. Lors de cette translation, la jupe axiale 58 du joint d'étanchéité 50 se rapproche de la paroi périphérique 16 du support 14 du côté droit, ce qui exerce une force de compression transversale sur le segment latéral 61 associé, et elle s'éloigne de la paroi périphérique 16 du support 14 du côté opposé, ici le côté gauche, ce qui exerce une force de traction transversale sur le segment latéral 61 associé. Soumis à ces forces de compression d'un côté, et de traction de l'autre, les segments 57, 61 de la portion de liaison 56 se déforment élastiquement, les ondulations du profil sinusoïdal tendant à s'aplanir du côté soumis à la force de traction, et à se rapprocher du côté soumis à la force de compression, tout en maintenant l'étanchéité entre le panneau tactile 12 et le support 14. C'est ce qui est représenté schématiquement en trait-tillé sur la figure 3.

On note que le joint d'étanchéité 50 selon l'invention permet d'obtenir une étanchéité optimale dans un faible encombrement, notamment grâce au mode de montage très simple du joint d'étanchéité 50 sur le support 14 et sur le panneau tactile 12 et grâce à la structure du joint d'étanchéité. Il est possible d'obtenir un dispositif de commande haptique 10 dont l'épaisseur transversale des segments longitudinaux 57 du joint d'étanchéité 50 est inférieure à 5 millimètres et dont l'épaisseur transversale des segments latéraux 61 est inférieure à 8 millimètres. Ceci permet de minimiser l'encombrement du joint d'étanchéité 50 dans un plan transversal, en minimisant l'espace transversal entre la paroi axiale périphérique 16 du support 14 et le châssis 36 du panneau tactile 12.

## Revendications

1. Dispositif de commande haptique (10), notamment pour un véhicule automobile, qui comprend un panneau transversal tactile (12) monté mobile par rapport à un support fixe (14), le support (14) comportant une paroi périphérique (16) qui entoure le panneau tactile (12) et qui s'étend globalement vers l'avant suivant une direction axiale (A1) orthogonale au plan (T) du panneau tactile (12), le panneau tactile (12) étant pourvu d'au moins une zone tactile (48) à l'avant et d'au moins un système d'entraînement (46), un signal de commutation pouvant être déclenché lorsque la zone tactile (48) est effleurée de manière que le panneau tactile (12) soit entraîné par le système d'entraînement (46) dans le plan du panneau tactile (12) en effectuant des mouvements par rapport au support (14),
**caractérisé en ce qu'**un joint d'étanchéité (50) est agencé sur le pourtour du panneau tactile (12), dans un espace annulaire situé entre le panneau tactile (12) et la paroi périphérique (16) du support (14), le joint d'étanchéité (50) comportant :
- une portion interne (52) en contact étanche avec le panneau tactile (12),
- une portion externe (54) en contact étanche avec la paroi périphérique (16) du support (14), et
- une portion de liaison (56) qui s'étend entre la portion interne (52) et la portion externe (54) et qui est déformable élastiquement de manière à absorber les déplacements relatifs du panneau tactile (12) par rapport à la paroi périphérique (16) du support (14) sans supprimer l'effet haptique produit par les mouvements du panneau tactile (12).

2. Dispositif (10) selon la revendication précédente, **caractérisé en ce que** la portion interne (52) du joint d'étanchéité (50) comporte une jupe axiale (58) qui s'étend sensiblement parallèlement à la paroi adjacente (38) du panneau tactile (12) et qui est plaquée contre la paroi adjacente (38) du panneau tactile (12).

3. Dispositif (10) selon la revendication précédente, **caractérisé en ce que** le panneau tactile (12) comporte une dalle tactile (34) qui est montée sur un châssis périphérique (36) en forme de cadre, le châssis (36) comportant une paroi axiale externe (38), et **en ce que** la jupe axiale (58) est plaquée contre la paroi axiale externe (38) du châssis (36).

4. Dispositif (10) selon l'une quelconque des revendications précédentes, **caractérisé en ce que** la portion externe (54) du joint d'étanchéité (50) est constituée par une cloison axiale qui s'étend globalement dans le prolongement de la paroi périphérique (16) du support (14) vers l'avant.

5. Dispositif (10) selon la revendication précédente, **caractérisé en ce que** la face externe (26) de la paroi périphérique (16) du support (14) comporte une surface d'épaulement (62) orientée vers l'avant et **en ce qu'**un tronçon d'extrémité arrière (64) de la portion externe (54) du joint d'étanchéité (50) est monté en appui contre la surface d'épaulement (62).

6. Dispositif (10) selon la revendication 4 ou 5, **caractérisé en ce que** la portion externe (54) du joint d'étanchéité (50) est montée serrée sur la paroi périphérique 16) du support (14).

7. Dispositif (10) selon l'une quelconque des revendications précédentes, **caractérisé en ce que** la portion de liaison (56) a globalement la forme d'une cloison transversale.

8. Dispositif (10) selon l'une quelconque des revendications 1 à 6, **caractérisé en ce que** la portion de liaison (56) comporte un profil déformable élastiquement suivant une direction transversale d'entraînement (A2) du panneau tactile (12) par rapport au support (14).

9. Dispositif (10) selon la revendication précédente, **caractérisé en ce que** le profil déformable élastiquement a globalement une forme ondulée du type sinusoïdale dans un plan axial parallèle à la direction transversale d'entraînement (A2).

10. Dispositif (10) selon la revendication 8 ou 9, **caractérisé en ce que** le profil déformable élastiquement s'étend le long des segments longitudinaux (57) de la portion de liaison (56), de part et d'autre du panneau tactile (12), parallèlement à la direction transversale d'entraînement (A2), et le profil déformable élastiquement s'étend dans la largeur des segments latéraux (61), de part et d'autre du panneau tactile (12).

11. Dispositif (10) selon l'une quelconque des revendications précédentes, **caractérisé en ce qu'**un couvercle (24) en forme de cadre est monté sur la paroi périphérique (16) du support (14) de manière à délimiter intérieurement une zone accessible du panneau tactile (12), le couvercle (24) étant monté en appui axial contre le sommet du joint d'étanchéité (50).

12. Dispositif (10) selon la revendication précédente, **caractérisé en ce que** le couvercle (24) comporte dans sa face transversale arrière une rainure (66) qui est prévue pour recevoir une extension axiale de la portion externe (54) du joint d'étanchéité (50).

13. Dispositif (10) selon la revendication 11 ou 12 prise en combinaison avec la revendication 3, **caractérisé en ce que** la portion interne (52) du joint d'étanchéité (50) comporte une extension transversale interne (60) qui est interposée entre le châssis (36) et le couvercle (24).

14. Dispositif (10) selon l'une quelconque des revendications précédentes, **caractérisé en ce qu'**un écran d'affichage (20) est agencé entre le panneau tactile (12) et une paroi de fond (18) du support (14).

## Patentansprüche

1. Haptische Steuerungsvorrichtung (10), insbesondere für ein Kraftfahrzeug, die ein berührungsempfindliches, quer verlaufendes Feld (12) aufweist, das gegenüber einem festen Träger (14) beweglich gelagert ist, wobei der Träger (14) eine Umfangswand (16) aufweist, die das berührungsempfindliche Feld (12) umgibt und sich insgesamt in einer orthogonal zur Ebene (T) des berührungsempfindlichen Feldes (12) verlaufenden axialen Richtung (A1) nach vom erstreckt, wobei das berührungsempfindliche Feld (12) vorne mit zumindest einem berührungsempfindlichen Bereich (48) und mit zumindest einem Antriebssystem (46) versehen ist, wobei ein Schaltsignal dann ausgelöst werden kann, wenn der berührungsempfindliche Bereich (48) so angetippt wird, dass das berührungsempfindliche Feld (12) von dem Antriebssystem (46) in der Ebene des berührungsempfindlichen Feldes (12) mitgenommen wird, indem es Bewegungen gegenüber dem Träger (14) ausführt,
**dadurch gekennzeichnet, dass** eine Dichtung (50) am Umfang des berührungsempfindlichen Feldes (12) in einem ringförmigen Raum angeordnet ist, der sich zwischen dem berührungsempfindlichen Feld (12) und der Umfangswand (16) des Trägers (14) befindet, wobei die Dichtung (50) enthält:
- einen inneren Abschnitt (52), der mit dem berührungsempfindlichen Feld (12) in dichtem Kontakt steht,
- einen äußeren Abschnitt (54), der mit der Umfangswand (16) des Trägers (14) in dichtem Kontakt steht, und
- einen Verbindungsabschnitt (56), der sich zwischen dem inneren Abschnitt (52) und dem äußeren Abschnitt (54) erstreckt und elastisch so verformbar ist, dass er relative Verlagerungen des berührungsempfindlichen Feldes (12) gegenüber der Umfangswand (16) des Trägers (14) aufnimmt, ohne die von den Bewegungen des berührungsempfindlichen Feldes (12) erzeugte haptische Wirkung aufzuheben.

2. Vorrichtung (10) nach dem vorangehenden Anspruch, **dadurch gekennzeichnet, dass** der innere Abschnitt (52) der Dichtung (50) eine axial verlaufende Schürze (58) aufweist, die sich im Wesentlichen parallel zur angrenzenden Wand (38) des berührungsempfindlichen Feldes (12) erstreckt und an die angrenzende Wand (38) des berührungsempfindlichen Feldes (12) angedrückt wird.

3. Vorrichtung (10) nach dem vorangehenden Anspruch, **dadurch gekennzeichnet, dass** das berührungsempfindliche Feld (12) eine berührungsempfindliche Platte (34) aufweist, die an ein rahmenförmiges Umfangsgestell (36) montiert ist, wobei das Gestell (36) eine axial verlaufende Außenwand (38) aufweist, und dass die axiale Schürze (58) an die axial verlaufende Außenwand (38) des Gestells (36) angedrückt wird.

4. Vorrichtung (10) nach einem der vorangehenden Ansprüche, **dadurch gekennzeichnet, dass** der äußere Abschnitt (54) der Dichtung (50) aus einer axial verlaufenden Trennwand besteht, die sich insgesamt in der Verlängerung der Umfangswand (16) des Trägers (14) nach vom erstreckt.

5. Vorrichtung (10) nach dem vorangehenden Anspruch, **dadurch gekennzeichnet, dass** die Außenseite (26) der Umfangswand (16) des Trägers (14) eine Schulterfläche (62) aufweist, die nach vom ausgerichtet ist, und dass ein hinteres Endstück (64) des äußeren Abschnitts (54) der Dichtung (50) in Anlage an der Schulterfläche (62) montiert ist.

6. Vorrichtung (10) nach Anspruch 4 oder 5, **dadurch gekennzeichnet, dass** der äußere Abschnitt (54) der Dichtung (50) mit der Umfangswand (16) des Trägers (14) verspannt montiert ist.

7. Vorrichtung (10) nach einem der vorangehenden Ansprüche, **dadurch gekennzeichnet, dass** der Verbindungsabschnitt (56) insgesamt die Form einer quer verlaufenden Trennwand hat.

8. Vorrichtung (10) nach einem der Ansprüche 1 bis 6, **dadurch gekennzeichnet, dass** der Verbindungsabschnitt (56) ein Profil hat, das in quer verlaufender Mitnahmerichtung (A2) des berührungsempfindlichen Feldes (12) gegenüber dem Träger (14) elastisch verformbar ist.

9. Vorrichtung (10) nach dem vorangehenden Anspruch, **dadurch gekennzeichnet, dass** das elastisch verformbare Profil insgesamt eine sinusartige Wellenform in einer axialen Ebene parallel zur quer verlaufenden Mitnahmerichtung (A2) hat.

10. Vorrichtung (10) nach Anspruch 8 oder 9, **dadurch gekennzeichnet, dass** das elastisch verformbare Profil sich entlang der Längssegmente (57) des Verbindungsabschnitts (56) beiderseits des berührungsempfindlichen Feldes (12) parallel zur quer verlaufenden Mitnahmerichtung (A2) erstreckt und das elastisch verformbare Profil sich in der Breite der Seitensegmente (61) beiderseits des berührungsempfindlichen Feldes (12) erstreckt.

11. Vorrichtung (10) nach einem der vorangehenden Ansprüche, **dadurch gekennzeichnet, dass** eine rahmenförmige Abdeckung (24) an die Umfangswand (16) des Trägers (14) so montiert ist, dass sie innen einen zugänglichen Bereich des berührungsempfindlichen Feldes (12) begrenzt, wobei die Abdeckung (24) in axialer Abstützung am Scheitel der Dichtung (50) montiert ist.

12. Vorrichtung (10) nach dem vorangehenden Anspruch, **dadurch gekennzeichnet, dass** die Abdeckung (24) in ihrer hinteren Querseite eine Rille (66) aufweist, die dazu vorgesehen ist, eine axiale Erweiterung des äußeren Abschnitts (54) der Dichtung (50) aufzunehmen.

13. Vorrichtung (10) nach Anspruch 11 oder 12 in Kombination mit Anspruch 3, **dadurch gekennzeichnet, dass** der innere Abschnitt (52) der Dichtung (50) eine quer verlaufende, innere Erweiterung (60) aufweist, die zwischen dem Gestell (36) und der Abdeckung (24) eingesetzt ist.

14. Vorrichtung (10) nach einem der vorangehenden Ansprüche, **dadurch gekennzeichnet, dass** ein Anzeigebildschirm (20) zwischen dem berührungsempfindlichen Feld (12) und einer Rückwand (18) des Trägers (14) angeordnet ist.

## Claims

1. Haptic control device (10), in particular for a motor vehicle, which comprises a tactile transversal panel (12) mounted movably relative to a fixed support (14), the support (14) including a peripheral wall (16) which surrounds the tactile panel (12) and which extends generally towards the front in an axial direction (A1) at right-angles to the plane (T) of the tactile panel (12), the tactile panel (12) being provided with at least one tactile zone (48) at the front and with at least one drive system (46), a switching signal being able to be triggered when the tactile zone (48) is touched so that the tactile panel (12) is driven by the drive system (46) in the plane of the tactile panel (12) performing movements relative to the support (14),
**characterised by** the fact that a seal (50) is arranged on the periphery of the tactile panel (12), in an annular space situated between the tactile panel (12) and the peripheral wall (16) of the support (14), the seal (50) including:
- an inner portion (52) in sealed contact with the tactile panel (12),
- an outer portion (54) in sealed contact with the peripheral wall (16) of the support (14), and
- a connecting portion (56) which extends between the inner portion (52) and the outer portion (54) and which is elastically deformable so as to absorb the relative displacements of the tactile panel (12) relative to the peripheral wall (16) of the support (14) without removing the haptic affect produced by the movements of the tactile panel (12).

2. Device (10) as described in the preceding claim, **characterised by** the fact that the inner portion (52) of the seal (50) includes an axial skirt (58) which extends substantially parallel with the adjacent wall (38) of the tactile panel (12) and which is pressed against the adjacent wall (38) of the tactile panel (12).

3. Device (10) as described in the preceding claim, **characterised by** the fact that the tactile panel (12) includes a touchscreen (34) which is mounted on a peripheral surround (36) in the form of a frame, the surround (36) including an outer axial wall (38), and by the fact that the axial skirt (58) is pressed against the outer axial wall (38) of the surround (36).

4. Device (10) as described in any one of the preceding claims, **characterised by** the fact that the outer portion (54) of the seal (50) is formed by an axial partition which extends generally in the extension of the peripheral wall (16) of the support (14) towards the front.

5. Device (10) as described in the preceding claim, **characterised by** the fact that the outer face (26) of the peripheral wall (16) of the support (14) includes a shoulder surface (62) orientated towards the front and by the fact that a rear end section (64) of the outer portion (54) of the seal (50) is mounted in abutment against the shoulder surface (62).

6. Device (10) as described in claim 4 or 5, **characterised by** the fact that the outer portion (54) of the seal (50) is mounted clamped on the peripheral wall 16) of the support (14).

7. Device (10) as described in any one of the preceding claims, **characterised by** the fact that the connecting portion (56) generally has the form of a transversal partition.

8. Device (10) as described in any one of claims 1 to 6, **characterised by** the fact that the connecting portion (56) includes a profile elastically deformable in a transversal drive direction (A2) of the tactile panel (12) relative to the support (14).

9. Device (10) as described in the preceding claim, **characterised by** the fact that the elastically deformable profile generally has an undulating shape of sinusoidal type in an axial plane parallel with the transversal drive direction (A2).

10. Device (10) as described in claim 8 or 9, **characterised by** the fact that the elastically deformable profile extends along longitudinal segments (57) of the connecting portion (56), on either side of the tactile panel (12), parallel with the transversal drive direction (A2), and the elastically deformable profile extends in the width of the lateral segments (61), on either side of the tactile panel (12).

11. Device (10) as described in any one of the preceding claims, **characterised by** the fact that a cover (24) in the form of a frame is mounted on the peripheral wall (16) of the support (14) so as to internally define an accessible zone of the tactile panel (12), the cover (24) being mounted in axial abutment against the top of the seal (50).

12. Device (10) as described in the preceding claim, **characterised by** the fact that the cover (24) includes in its rear transversal face a groove (66) which is intended to receive an axial extension of the outer portion (54) of the seal (50).

13. Device (10) as described in claim 11 or 12 taken in combination with claim 3, **characterised by** the fact that the inner portion (52) of the seal (50) includes an inner transversal extension (60) which is interposed between the surround (36) and the cover (24).

14. Device (10) as described in any one of the preceding claims, **characterised by** the fact that a display screen (20) is arranged between the tactile panel (12) and a bottom wall (18) of the support (14).
